Europäisches Patentamt

European Patent Office

Office européen des brevets

(11) Veröffentlichungsnummer: **0 010 568**
**B1**

(12) **EUROPÄISCHE PATENTSCHRIFT**

(45) Veröffentlichungstag der Patentschrift:
01.12.82

(21) Anmeldenummer: 79101795.7

(22) Anmeldetag: 07.06.79

(51) Int. Cl.³: **F 41 H 3/00,** F 41 J 9/13,
G 01 S 1/00, F 41 G 7/00,
H 01 Q 17/00

(54) Verfahren und Vorrichtung zur Tarnung eines metallischen Objektes gegen Radiometerortung durch Anpassen seiner Eigenstrahlung an die Abstrahlung seiner Umgebung.

(30) Priorität: 06.11.78 DE 2848072

(43) Veröffentlichungstag der Anmeldung:
14.05.80 Patentblatt 80/10

(45) Bekanntmachung des Hinweises auf die Patenterteilung:
01.12.82 Patentblatt 82/48

(84) Benannte Vertragsstaaten:
BE CH FR GB IT NL SE

(56) Entgegenhaltungen:
DE-B-1 090 728
FR-A-2 131 929
US-A-3 127 608
US-A-3 305 863
US-A-3 309 704
US-A-3 339 201

(73) Patentinhaber: ELTRO GmbH Gesellschaft für Strahlungstechnik, Kurpfalzring 106 Postfach 10 21 20, D-6900 Heidelberg 1 (DE)

(72) Erfinder: Siebecker, Hans, Dr., Dürer-Strasse 11, D-6901 Wiesenbach (DE)
Erfinder: Wichmann, Günter, Oskar-Trinks-Strasse 11, D-6906 Leimen (DE)

(74) Vertreter: Muschka, Wilhelm, ELTRO GMBH GESELLSCHAFT FÜR STRAHLUNGSTECHNIK Kurpfalzring 106 Postfach 10 21 20, D-6900 Heidelberg 1 (DE)

# Verfahren und Vorrichtung zur Tarnung eines metallischen Objektes gegen Radiometerortung durch Anpassen seiner Eigenstrahlung an die Abstrahlung seiner Umgebung

Die Erfindung betrifft ein Verfahren und eine Vorrichtung zur Tarnung eines metallischen Objektes gegen Radiometerortung durch Anpassen seiner Eigenstrahlung an die Abstrahlung seiner Umgebung im Mikrowellenbereich, vorwiegend im Bereich der atmosphärischen Fenster um 20, 35 und 95 GHz.

Die FR-A-2 131 929 enthält ein ähnliches Verfahren, das jedoch auf eine Tarnung gegenüber aktiver Radarortung beschränkt ist, das heisst darauf, dass als Mikrowellenstrahlungsquelle eine passive Mikrowellenrückstrahlungsquelle verwendet wird. Diese Mikrowellenrückstrahlungsquelle ist ausserdem nicht nachregelbar.

Für militärische Anwendungen sind Breitbandstörquellen bekannt, die durch hohe Signalamplituden die Empfänger von aktiven Radaranlagen zustopfen und dadurch den einwandfreien Empfang der Echoimpulse vom Ziel verhindern. Bekannt sind ausserdem «intelligente» Störer, die schmalbandig auf dem Frequenzbereich des Radargerätes arbeiten und durch zeitlich synchronisierte Störimpulse Scheinziele vortäuschen.

Bekannt sind auch sogenannte Transponder, die Signale von dem Radargerät aufnehmen, verstärken und mit einer definierten Verzögerung in die Richtung des Radargerätes zurücksenden und damit auch das Vorhandensein von mehreren Zielen im Radarempfänger vortäuschen. Ebenfalls bekannt sind aus der Mikrowellentechnik sogenannte Radarabsorber, mit denen die Oberfläche eines Zieles abgedeckt werden kann und die die auftreffende Mikrowellenstrahlung mit einem hohen Dämpfungsgrad absorbieren und die Rückstreuung stark reduzieren. Diese Verfahren werden bei aktiven Radaranlagen des Gegners angewendet, bei denen reflektierte Senderstrahlung zur Zielortung und Vermessung ausgenutzt wird.

Aus dem Fachaufsatz «Weather Affects MM-Wave Missile Guidance Systems» der Zeitschrift «Microwaves», September 1977, Seiten 62–102, ist es ferner bekannt, dass sich in den atmosphärischen Fenstern um 20, 35 und 95 GHz natürliche Objekte, wie Gras und Pflanzenwuchs, wie Schwarzkörperstrahler, mit einem Emissionsgrad von nahezu 1 verhalten, während militärische Objekte, wie Panzer, LKWs usw., aus Metall einen Emissionsgrad von annähernd 0 und daher einen Remissionsgrad von annähernd 1 besitzen. Letztere sind somit ideale Reflektoren, wobei ein Teil der Strahlung gerichtet, ein Teil diffus reflektierend ist. Das bedeutet, dass bei radiometrischen Messungen von oben das militärische Objekt die Mikrowellenstrahlung des Himmels mit einer Temperatur von 30°K bei 35 GHz und 100°K bei 95 GHz reflektiert, während die Umgebung als Schwarzkörperstrahler mit der Umgebungstemperatur abstrahlt. Das militärische Objekt verhält sich also wie ein sehr kaltes Ziel in einer warmen Umgebung (Temperaturkontrast zwischen 240 und 280°K) und kann mit einem Mikrowellenradiometer als kalter Körper geortet werden. Bei bedecktem Himmel und Regen reduziert sich der Temperaturkontrast; er ist aber immer noch genügend hoch, um gepanzerte Fahrzeuge mit einem passiven Mikrowellensuchkopf zur Endphasenlenkung von Geschossen und Flugkörpern orten zu können.

Der vorliegenden Erfindung liegt die Aufgabe zugrunde, den Temperaturkontrast so weit zu reduzieren, dass die Ortung eines metallischen militärischen Objektes in dem jeweils ausgewählten Mikrowellenbereich nicht möglich ist. Diese Aufgabe wird gemäss der Erfindung dadurch gelöst, dass laufend der Bewachungsgrad, die Umgebungstemperatur und der Wolkenbedeckungsgrad in der Umgebung des metallischen Objektes bestimmt werden und dem Objekt eine Mikrowellenstrahlungsquelle zugeordnet wird, deren Ausgangsleistung jeweils so eingestellt wird, dass die Summe der Strahlungsanteile der Eigenstrahlung des Objekts und der Strahlung der Mikrowellenstrahlungsquelle in zumindest einem der ausgewählten Spektralbereiche zusammen mit der reflektierten Himmelstrahlung ungefähr gleich der Abstrahlung der bewachsenen Umgebung ist.

Es kann damit gerechnet werden, dass der Temperaturkontrast des ungetarnten Objektes zu seiner Bekämpfung mit Geschossen und Flugkörpern ausgenutzt wird, deren Abmessungen die Verwendung einer grossen Antenne in den drei erwähnten Mikrowellenbereichen nicht zulässt, so dass die Bündelungsschärfe der Antenne nicht ·ausreicht, um in Auffassentfernung von einigen hundert Metern nur Strahlung von dem Ziel bzw. Teilen des Zieles zu empfangen. Es werden immer Anteile der Umgebungsstrahlung vorhanden sein, die den Ziel/Hintergrund-Kontrast reduzieren. Um diese Kontrastverminderung so klein wie möglich zu halten, zieht man den kurzwelligen Bereich um 95 GHz den übrigen Bereichen gegenüber vor. Auch in diesem Bereich ist die Antennenbündelung jedoch noch ungenügend, so dass es nach einer Weiterbildung der Erfindung möglich ist, als aktive Mikrowellenstrahlungsquelle einen Kugelstrahler auf dem zu tarnenden Fahrzeug zu installieren, dessen in Kugelwellen ausgesandte Strahlungsenergie das Fahrzeug unter allen Aspektwinkeln, unter denen Geschosse und Flugkörper anfliegen können, zu tarnen vermag. Den gleichen Effekt erzielt man beim Einsatz von passiven Tarnmitteln, wenn man ausnutzt, dass Radarabsorber in dem gleichen Wellenlängenbereich emittieren, in dem sie absorbieren. Es genügt also, nur einen Bruchteil der Oberfläche des Fahrzeuges mit einem Radarabsorber zu verdekken, wenn es gelingt, die Temperatur des Absorbers für das zu störende Radarband so weit anzuheben, dass die integrale Abstrahlung des aufgeheizten Radarabsorbers der Abstrahlung des von dem Ziel abgedeckten bewachsenen Untergrundes in dem ausgewählten Wellenlängenbereich entspricht. Diese Temperatur kann in weiten Grenzen an die abstrahlende Fläche angepasst werden, wenn man nach einer Weiterbildung der Erfindung die Absorberfläche mittels der Triebwerkabgase aufheizt und über die Abgaszuführung die Strahlungsdichte reguliert.

Im folgenden werden einige Ausführungsbeispiele der Erfindung anhand einer Zeichnung näher erläutert, wobei die in den einzelnen Figuren einander entsprechenden Teile dieselben Bezugszahlen aufweisen. Es zeigt

Fig. 1 die schematische Darstellung des Emissions- bzw. Remissionsverhaltens des Zieles und seiner Umgebung;

Fig. 2 die schematische Darstellung des Amplitudenverlaufs der Strahlungsdichte $L_e$ in der Szene gemäss Fig. 1 für den Millimeterwellenbereich von 95 GHz bei unbedecktem und bedecktem Himmel, mit charakteristischem Einschnitt bei metallischem Ziel ohne Tarnung (a) und bei Anpassung der Strahlungsdichte des Zieles durch aktiven Kugelstrahler oder passive Kontrastanpassung über aufgeheizten Mikrowellenabsorber (b),

Fig. 3 die schematische Darstellung der Wirkungsweise eines Störstrahlers bei Installation auf einem gepanzerten Fahrzeug,

Fig. 4a die schematische Darstellung der Wirkungsweise eines aufgeheizten Mikrowellenabsorbers als Störstrahler;

Fig. 4b die Montage zweier Mikrowellenabsorber auf einem Panzer in der Nähe der Auspuffanlage,

Fig. 5 das Blockschaltbild eines aktiven Kugelstrahlers mit manueller Einstellung des Dämpfungsgliedes und

Fig. 6 das Blockschaltbild eines aktiven Kugelstrahlers nach Fig. 3 mit automatischer Einstellung des Dämpfungsgliedes.

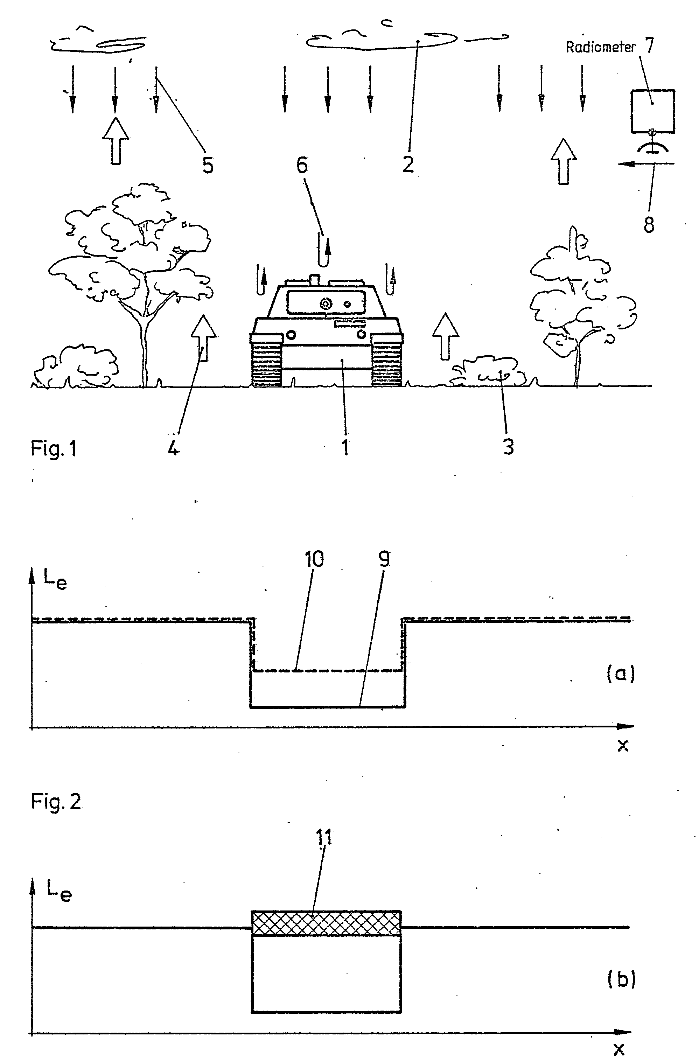

In Fig. 1 ist schematisch das Emissions- bzw. Remissionsverhalten des Zieles 1, des klaren und wolkenbedeckten Himmels 2 und der bewachsenen Umgebung 3 dargestellt. Die dicken Pfeile 4 zeigen die natürliche Pflanzenemission (Emissionsfaktor $E = 1$, Remission $R = 0$), die dünnen Pfeile 5 kennzeichnen die wegen der wesentlich niedrigeren Strahlungstemperatur von 30. bis 100°K wesentlich geringere Strahlungsemission des Himmels und die gekrümmten Pfeile sollen das starke Remissionsverhalten des Zieles ($E = 0$, $R = 1$) darstellen.

Eine radiometrische Vermessung mit einem senkrecht nach unten schauenden Mikrowellenradiometer 7, das in Pfeilrichtung 8 über die Szene von Fig. 1 geführt wird, liefert ein Signal mit einem Amplitudenverlauf nach Fig. 2 für den Millimeterwellenbereich bei 95 GHz und klarem Himmel bei 9 bis wolkenbedecktem Himmel bei 10. Während $L_e$ für den bewachsenen Boden unabhängig von der Wolkenbedeckung und damit der Temperatur des Himmels ist, bringt der blaue Himmel mit einer Temperatur von etwa 30°K bei der vom Ziel remittierten Himmelstrahlung einen tieferen Einschnitt (ausgezogen gezeichnete Kurve 9) als bei bewölktem Himmel mit einer Temperatur von etwa 100°K (gestrichelt gezeichnete Kurve 10). Die schematische Darstellung zeigt jedoch einen grossen Strahlungsunterschied zwischen Zielremissionsstrahlung und Emissionsstrahlung des Bewuchses. Dieser Strahlungskontrast kann, wie bereits erwähnt, in einem passiven Mikrowellensuchkopf zur Ortung des militärischen Objektes 1 ausgenutzt werden.

Fig. 2b zeigt den Amplitudenverlauf der Strahlung $I_o$, bei der durch aktive oder passive Tarnmassnahmen die Lücke 11 ausgefüllt und dem Radiometer 7 (Fig. 1) eine weitgehend konstante Strahlungsdichte über Ziel und bewachsenem Erdboden angeboten wird.

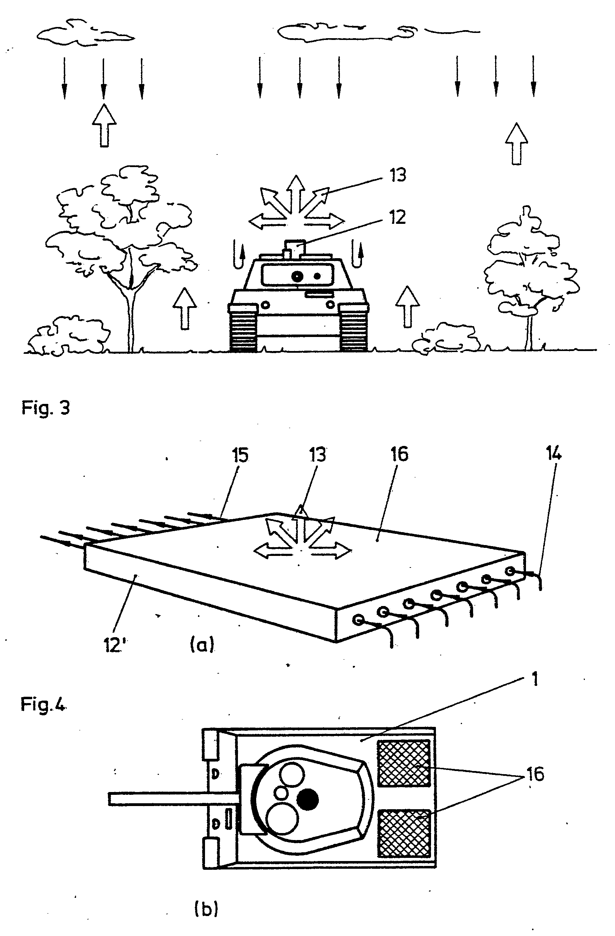

In Fig. 3 ist der Störstrahler 12, z.B. ein Mikrowellen-Rundumstrahler, auf dem Turm des Panzers 1 montiert und strahlt die Störstrahlung in alle Richtungen des oberen Halbraumes gleichmässig ab, wie die sternförmig auseinanderlaufenden Pfeile 13 anzeigen. Bei optimaler Einstellung der Ausgangsleistung wird die Bestrahlungsdichte des Halbraums über dem Panzer durch den Störstrahler an die Umgebungsstrahldichte angepasst.

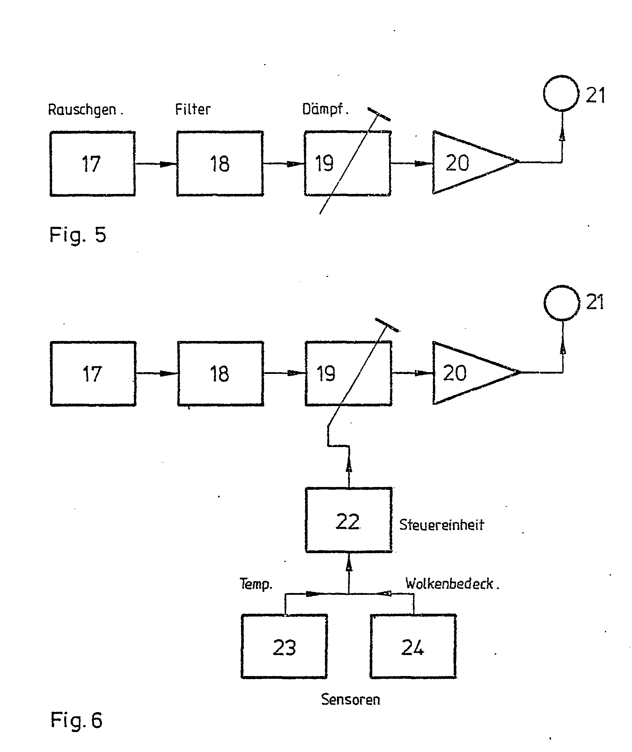

Die schematische Darstellung der Wirkungsweise eines aufgeheizten Mikrowellenabsorbers 12' in Fig. 4a zeigt wieder – durch die Pfeile 13 symbolisiert – die Strahlungsemission der Mikrowellenenergie, die durch die Durchflussmenge und die Temperatur der bei 14 eintretenden und bei 15 austretenden Auspuffabgase geregelt werden kann. Bei einem anderen Ausführungsbeispiel kann die Emission auch mit Hilfe einer elektrischen Heizung geregelt werden. Die Absorberoberfläche 16 ist so gestaltet, dass sie für den ausgewählten Mikrowellenbereich absorbiert. In Fig. 4b ist als Beispiel die Montage der in Form von Platten ausgebildeten Absorberoberflächen 17 nahe der Auspuffanlage des Panzers 1 dargestellt. Es reicht aus, wenn die Absorber nur einen Teil der Panzeroberfläche bedecken, sofern die Oberflächentemperatur so hoch gewählt wird, dass die Bestrahlungsdichte $L_e$ gleich derjenigen der Umgebung ist.

Die in Form eines aktiven Kugelstrahlers ausgebildete Mikrowellenstrahlungsquelle 12 gemäss Fig. 3 setzt sich hinsichtlich ihrer optronischen Bauelemente – wie dies im Blockschaltbild der Fig. 5 dargestellt ist – aus dem breitbandigen Mikrowellenrauschgenerator 17 für den ausgewählten Spektralbereich sowie dem nachgeschalteten Filter 18 für den ausgesuchten Mikrowellenbereich und dem einstellbaren Dämpfungsglied 19 zusammen. Über den Nachverstärker 20 wird die Rundstrahlenantenne 21 gespeist.

Die Einstellung des Dämpfungsgliedes zur Regelung der Abstrahlung und Beleuchtungsdichte kann – wie in Fig. 5 – manuell erfolgen. Sie kann aber auch – wie in Fig. 6 – durch die Steuereinheit 22 automatisch geregelt werden. Sie bekommt die wichtigsten Parameter für die Einstellung von den für die Umgebungstemperatur und den Wolkenbedeckungsgrad vorgesehenen Sensoren 23 bzw. 24. Diese Sensoren bestimmen den Strahlungsunterschied von Ziel und Hintergrund und führen ihn als Stellgrösse dem Dämpfungsglied 19 zu. Bei anderen Ausführungsbeispielen lassen sich auch noch andere Parameter für die Regelung heranziehen, um den Anpassvorgang des Zieles an die Umgebung zu optimieren, ohne dass dadurch der Rahmen der Erfindung überschritten wird. Der Aufwand wird jeweils durch die Kosteneffektivität und die Bedeutung des zu tarnenden Zieles festgelegt.

**Patentansprüche**

1. Verfahren zur Tarnung eines metallischen Objekts gegen Radiometerortung durch Anpassen seiner Eigenstrahlung an die Abstrahlung seiner Umgebung im Mikrowellenbereich, vorwiegend im Bereich der atmosphärischen Fenster 20, 35 und 95 GHz, dadurch gekennzeichnet, dass laufend der Bewachsungsgrad, die Umgebungstemperatur und der Wolkenbedeckungsgrad in der Umgebung des metallischen Objekts (1) bestimmt werden und dem Objekt eine Mikrowellenstrahlungsquelle (12; 12'; 17–21) zugeordnet wird, deren Ausgangsleistung jeweils so eingestellt wird, dass die Summe der Strahlungsanteile der Eigenstrahlung des Objekts und der Strahlung der Mikrowellenstrahlungsquelle in zumindest einem der ausgewählten Spektralbereiche zusammen mit der reflektierten Himmelstrahlung (2) ungefähr gleich der Abstrahlung der bewachsenen Umgebung (3) ist.

2. Verfahren nach Anspruch 1, dadurch gekennzeichnet, dass die Umgebungsparameter – wie z.B. die Strahlung des Himmels (2) und der bewachsenen Umgebung (3) – mit einem in dem ausgewählten Wellenlängenbereich arbeitenden Radiometer (7) gemessen wird und aus den gemessenen Strahlungsdichten die Ausgangsleistung der Mikrowellenstrahlungsquelle (12; 12'; 17–21) automatisch eingestellt wird.

3. Verfahren nach Anspruch 1, dadurch gekennzeichnet, dass der Wolkenbedeckungsgrad mit einem Bedeckungsgradmessgerät (24) und die Umgebungstemperatur mit einem Fernthermometer (23) gemessen werden und die Ergebnisse zur automatischen Einstellung der Ausgangsleistung der Mikrowellenstrahlungsquelle (12; 12'; 17–21) eingesetzt werden.

4. Verfahren nach einem der vorausgehenden Ansprüche, dadurch gekennzeichnet, dass in der Mikrowellenstrahlungsquelle ein Rauschgenerator (17) Verwendung findet.

5. Verfahren nach einem der Ansprüche 1 bis 3, dadurch gekennzeichnet, dass als Mikrowellenstrahlungsquelle ein Mikrowellenabsorber (12') dient, dessen Abstrahlflächen (16) mit Hilfe von Triebwerksabgasen oder einer elektrischen Heizung aufgeheizt und über die Grösse und Temperatur dieser Flächen die Strahlungsdichte an die Umgebung eingestellt und angepasst wird.

6. Vorrichtung zur Durchführung des Verfahrens nach Anspruch 4, dadurch gekennzeichnet, dass der Rauschgenerator (17) mit einer Rundstrahlcharakteristik – z.B. einer Rundstrahlantenne (21) – versehen und seine Ausgangsleistung über ein Dämpfungsglied (19) einstellbar ist.

7. Vorrichtung nach Anspruch 6, dadurch gekennzeichnet, dass das Dämpfungsglied (19) automatisch über eine Steuereinheit (22) einstellbar ist, die ihrerseits von der Umgebungstemperatur und dem Wolkenbedeckungsgrad zugeordneten Sensoren (23; 24) abhängt.

**Claims**

1. A method of camouflaging a metallic object against radiometer location by adapting its characteristic radiation to the radiation of its environment in the microwave range, predominantly in the range of the atmospheric windows 20, 35 and 95 GHz, characterised in that the degree of ground vegetation, the ambient temperature and the degree of cloud cover in the environment of the metallic object (1) are constantly determined and in that there is associated with the object a microwave radiation source (12; 12'; 17–21), the output of which is always so adjusted that the sum of the radiation portions of the characteristic radiation of the object and of the radiation from the microwave radiation source in at least one of the selected spectral ranges, together with the reflected sky radiation (2) is approximately equal to the radiation from the vegetation covered environment (3).

2. Method according to Claim 1, characterised in that the environmental parameters, such as for example the radiation from the sky (2) and from the vegetation covered environment (3) are measured with a radiometer (7) operating in the selected wavelength range and in that the output of the microwave radiation source (12; 12'; 17–21) is automatically adjusted from the measured radiation densities.

3. Method according to Claim 1, characterised in that the degree of cloud cover is measured with a cloud cover meter (24) and the ambient temperature is measured with a remote thermometer (23), the results being used for automatic adjustment of the output from the microwave radiation source (12; 12'; 17–21).

4. Method according to one of the preceding Claims, characterised in that a noise generator (17) is used in the microwave radiation source.

5. Method according to one of Claims 1 to 3, characterised in that used as the microwave radiation source is a microwave absorber (12'), the radiation faces (16) of which are heated by means of waste gases from the propulsion unit or by an electrical heating system and in that the radiation density is adjusted and adapted to the environment via the size and temperature of these surfaces.

6. An apparatus for carrying out the method according to Claim 4, characterised in that the noise generator (17) has an omnidirectional characteristic – e.g. an omnidirectional antenna (21) – its output being adjustable via a damping member (19).

7. An apparatus according to Claim 6, characterised in that the damping member (19) is automatically adjustable via a control unit (22) which in turn depends upon sensors (23, 24) associated with the ambient temperature and the degree of cloud cover.

**Revendications**

1. Procédé de camouflage d'un objet métallique contre une localisation par radiomètre par adaptation de son rayonnement propre au rayonnement de son environnement dans le domaine des microondes, de préférence dans le domaine des fenêtres atmosphériques de 20, 35 et 95 GHz, caractérisé en ce qu'on détermine en permanence le degré de végétation, la température ambiante et le degré de recouvrement par les nuages dans l'environnement de l'objet métallique (1) et en ce qu'on associe à l'objet une source de rayonnement microonde (12; 12'; 17–21), dont la puissance de sortie est réglée à chaque fois de manière que la somme des proportions du rayonnement propre de l'objet et du rayonnement de la source de rayonnement microonde soit, au moins dans un des domaines spectraux sélectionnés et en combinaison avec le rayonnement réfléchi par le ciel (2), approximativement égale au rayonnement de la végétation environnante (3).

2. Procédé selon la revendication 1, caractérisé en ce que les paramètres de l'environnement – comme par exemple le rayonnement du ciel (2) et de la végétation environnante (3) – sont mesurés à l'aide d'un radiomètre (7) opérant dans le domaine sélectionné de longueurs d'ondes et en ce que la puissance de sortie de la source de rayonnement microonde (12; 12'; 17–21) est automatiquement réglée à partir des densitées mesurées de rayonnement.

3. Procédé selon la revendication 1, caractérisé en ce que le degré de recouvrement par les nuages est mesuré à l'aide d'un appareil de mesure de degré de recouvrement (24), en ce que la température ambiante est mesurée à l'aide d'un téléthermomètre (23) et en ce que les résultats sont utilisés pour un réglage automatique de la puissance de sortie de la source de rayonnement microonde (12; 12'; 17–21).

4. Procédé selon l'une des revendications précédentes, caractérisé en ce qu'on utilise dans la source de rayonnement microonde un générateur de bruit (17).

5. Procédé selon l'une des revendications 1 à 3, caractérisé en ce qu'on utilise comme source de rayonnement microonde un absorbeur de microondes (12') dont les surfaces radiantes (16) sont chauffées à l'aide de gaz d'échappement de moteur ou à l'aide d'un chauffage électrique et en ce que la densité de rayonnement est réglée et adaptée à l'environnement par l'intermédiaire de la grandeur et de la température desdites surfaces.

6. Dispositif pour la mise en œuvre du procédé selon la revendication 4, caractérisé en ce que le générateur de bruit (17) est pourvu d'une caractéristique de rayonnement circulaire – par exemple une antenne de rayonnement circulaire (21) – et en ce que sa puissance de sortie est réglable par l'intermédiaire d'un organe d'amortissement (19).

7. Dispositif selon la revendication 6, caractérisé en ce que l'organe d'amortissement (19) est réglable automatiquement par l'intermédiaire d'une unité de commande (22) qui est elle-même fonction de détecteurs (23; 24) associés à la température ambiante et au degré de recouvrement par les nuages.

Fig. 1

Fig. 2

(a)

(b)

Fig. 3

Fig. 4

(a)

(b)

Fig. 5

Fig. 6